# EUROPEAN PATENT APPLICATION

(11) **EP 2 237 131 A1**
(43) Date of publication of application: **06.10.2010**
(21) Application number: 09007019.4
(22) Date of filing: 26.05.2009
(51) Int. Cl.: G06F 3/01, H04N 5/00, G06K 9/00, G06F 3/03, H04N 5/44

(54) **Gesture-based remote control system**

(30) Priority: 31.03.2009 TW 098110652
(71) Applicant: Topspeed Technology Corp., Chung Ho City Taipei Hsien Taiwan 235 (TW)
(72) Inventor: Chen, Shoei-Lai, Chung Ho City Taipei Hsien Taiwan 235 (TW); Hsu, Che-Hao, Chung Ho City Taipei Hsien Taiwan 235 (TW)
(74) Representative: TER MEER - STEINMEISTER & PARTNER GbR

(57) **Abstract**

A gesture-based remote control system includes a camera module (300), an image recognition module (100), a wireless transmitter (400), and a main-controlling electronic appliance (200). The image recognition module (100) is electrically connected to the camera module (300). The wireless transmitter (400) is electrically connected to the image recognition module (100). The main-controlling electronic appliance (200) is detachably connected to the image recognition module (100). The main-controlling electronic appliance (200) includes a monitor (202). A motion controlling command is obtained by recognizing an image of a user in the camera module (300) with the image recognition module (100). A key controlling command is obtained from the motion controlling command and a key code information by the image recognition module (100). The key controlling command is sent by the image recognition module (100) to the wireless transmitter (400). The key controlling command is sent to a controlled electronic application by the wireless transmitter to control the controlled electronic application.

## Description

### BACKGROUND OF THE INVENTION

### Field of the Invention

The present invention relates to a remote control system, and more particularly to a gesture-based remote control system.

### Description of Prior Art

It is inconvenient and complicated to operate many different home appliances by using different corresponding remote controls. Hence, many different key code information databases are built in the same remote control to operate varied home appliances whereby one remote control used with a mode switch key if enough for mode selection. Furthermore, some high-class remote controls are designed to emulate key codes of remote controls of different brands to overcome insufficiency of the key code information databases. However, it is inconvenient to operate the home appliances when users forget where the responding physical remote controls are placed.

### SUMMARY OF THE INVENTION

In order to improve the disadvantage mentioned above, the prevent invention provides a gesture-based remote control system to control at least one controlled electronic appliance.

In order to achieve the objective mentioned above, the gesture-based remote control system includes a camera module, an image recognition module, a wireless transmitter, and a main-controlling electronic appliance. The image recognition module is electrically connected to the camera module. The wireless transmitter is electrically connected to the image recognition module. The main-controlling electronic appliance is detachably connected to the image recognition module and has a monitor. A motion controlling command is obtained by recognizing an image of a user in the camera module with the image recognition module. A key controlling command is obtained from the motion controlling command and a key code information by the image recognition module. The key controlling command is sent to a controlled electronic application by the wireless transmitter to control the controlled electronic application.

### BRIEF DESCRIPTION OF DRAWING

The features of the invention believed to be novel are set forth with particularity in the appended claims. The invention itself, however, may be best understood by reference to the following detailed description of the invention, which describes an exemplary embodiment of the invention, taken in conjunction with the accompanying drawings, in which:
Fig. 1 is a block diagram of a gesture-based remote control system according to the present invention;
Fig. 2 is a schematic view of using an image difference method;
Fig. 3 is a schematic view of a plurality of division sections;
Fig. 4 is a schematic view of searching a direction of a movement area;
Fig. 5 is a schematic front view shows a position gesture of raising both arms outward and waving both arms up and down;
Fig. 6 is a schematic front view shows a location of the user and the corresponding positions of imitated touched keys;
Fig. 7 is a schematic bottom view shows a cancel gesture of raising both arms forward and waving both arms leftward and rightward;
Fig. 8 is a flowchart of executing a menu procedure;
Fig. 9 is a flowchart of executing a position procedure;
Fig. 10 is a flowchart of executing a cancel procedure;
Fig. 11 is a flowchart of executing an increment procedure;
Fig. 12 is a flowchart of executing a decrement procedure;
Fig. 13 is a flowchart of executing a click procedure; and
Fig. 14 is a flowchart of executing the gesture-based remote control system.

### DETAILED DESCRIPTION OF THE INVENTION

As mentioned above, it is inconvenient to operate the home appliances when users forget where the responding physical remote controls are located. In order to solve the disadvantages mentioned above, the prevent invention provides a gesture-based remote control system without the physical remote control to operate the electrical appliances. The gesture-based remote control system provides a camera module to fetch different images of the user's gesture. The gesture images (the images of the user's gesture) are processed to generate control signals corresponded to buttons of the physical remote control, and the control signals are provided to control the electrical appliances. In more detailed description, an electronic appliance (such as a television) with an on-screen display (OSD) is provided to be the universal remote control. Many varied key codes of the various remote controls are imitated, or the key code databases are directly used by the universal remote control. Further, the contents of operation menus are directly displayed on a monitor, and the operation menus are operated to control various electronic appliances without using any physical remote controls.

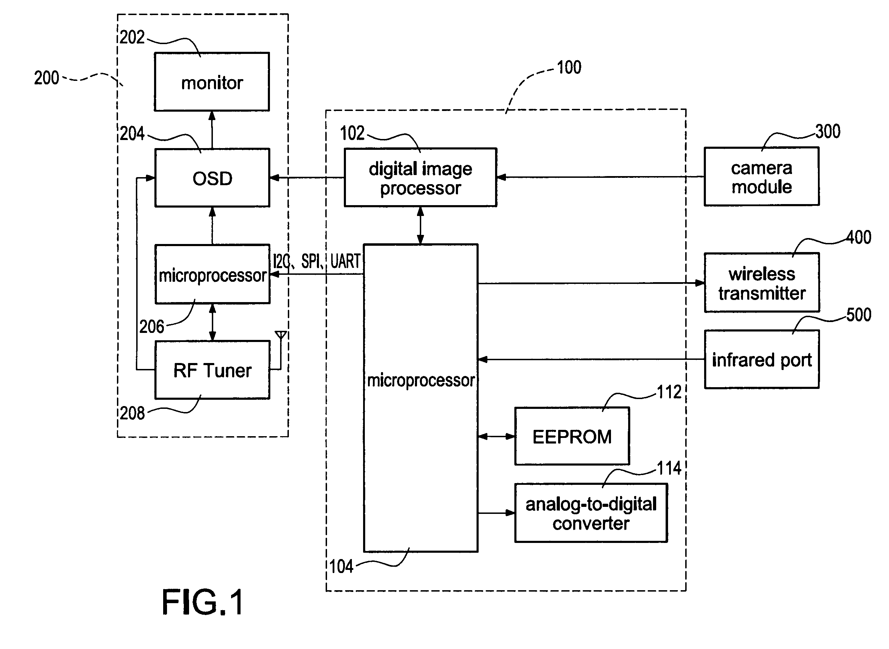

Reference is made to Fig. 1 which is a block diagram of a gesture-based remote control system according to the present invention. The gesture-based remote control system includes a camera module 300, an image recognition module 100, a wireless transmitter 400, an infrared port 500, and a main-controlling electronic appliance 200. The image recognition module 100 is electrically connected to the camera module 300, the wireless transmitter 400, the infrared port 500, and the main-controlling electronic appliance 200, respectively.

The image recognition module 100 has key code information of at least one controlled electronic appliance (not shown), and the key code information is stored in the image recognition module 100. The image recognition module 100 further includes a digital image processor 102, a microprocessor 104, an analog-to-digital converter 114, and an erasable programmable read-only memory (EEPROM) 112. The microprocessor 104 is electrically connected to the wireless transmitter 400, the infrared port 500, the main-controlling electronic appliance 200, the digital image processor 102, the analog-to-digital converter 114, and the erasable programmable read-only memory (EEPROM) 112. The digital image processor 102 is electrically connected to the camera module 300.

More particularly, the image recognition module 100 is provided to recognize an image of a user in the camera module 300 to obtain a motion controlling command. Further, a key controlling command is obtained from the motion controlling command and the key code information by the image recognition module 100. The image recognition module 100 sends the key controlling command to the wireless transmitter 400. Also, the key controlling command is sent to the controlled electronic application by the wireless transmitter (400) to control the controlled electronic application.

The image recognition module 100 receives the key code information sent from the controlled electronic appliance through the infrared port 500. The key code information is interpreted and then stored in the erasable programmable read-only memory (EEPROM) 112. Besides the erasable programmable read-only memory (EEPROM) 112, hundreds of known key code databases of the controlled electronic appliance 200 can be stored in the erasable programmable read-only memory (EEPROM) 112. The wireless transmitter 400 can send different kinds of IR or RF key controlling commands to control the controlled electronic appliances according to types of the controlled electronic appliances. When the main-controlling electronic appliance 200 is the controlled electronic appliance (such as a television), the image recognition module 100 can directly send the key controlling commands to the main-controlling electronic appliance 200 through different transmission interfaces (such as I2C, SPI, or UART). Besides digital signals, the image recognition module 100 can also send analog signals processed by the analog-to-digital converter 114 to the main-controlling electronic appliance 200.

The controlled electronic appliance can be a television, a DVD player, an air conditioner, or a computer. The main-controlling electronic appliance 200 (such as a television) has a monitor 202, and an on-screen display (OSD) 204. The key controlling command includes a startup command, a cancel command, an increment command, a decrement command, and a click command. The image recognition module 100 is detachably connected to the main-controlling electronic appliance 200 through, for example, a serial port. The image recognition module 100 sends video signals to the main-controlling electronic appliance 200 to display them on the monitor 202 for showing operation messages during the operation process.

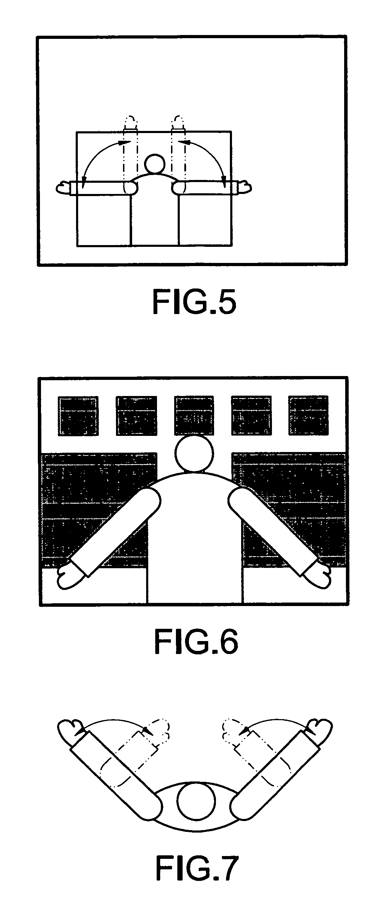

The gesture-based remote control system judges the user's gesture to a location gesture, a click gesture, a slide gesture, and a cancel gesture. The detailed description of the different gestures will be given as follows:
1. The location gesture. The universal imitated gesture-based remote control system has an electronic appliance (such as a television) with an on-screen display (OSD) function. Also, an operation menu is initially set in a disable state after starting up the gesture-based remote control system. Firstly, an optimal operation location for the user is automatically located, and a main menu is started and displayed on a monitor of the electronic appliance when the user raises both arms outward and waves both arms upward and downward (shown in Fig. 5). The operation locations of the imitated touched keys are located in four different locations. The first location is located over the head of the user, the second location is located both outer sides of the first location, the third location is located both outer sides of the second location, and the fourth location is located near right and left hands of the user (shown in Fig. 6). More particularly, function selection blocks are located in the first location, the second location, and the third location. Also, function adjustment blocks are located in the fourth location, and the function adjustment area are operated to switch (rotate) the operation menu or send function keys.
2. The click gesture. The click gesture is applied to the function selection area. A selection action is operated to click one time one of the imitated touched keys located in the function selection area. In addition, the selection action is canceled when one of the imitated touched keys is clicked again. Hence, the imitated touched keys are called toggle keys. Moreover, the present imitated touched key is automatically released when another imitated touched key is clicked. Hence, only one of the imitated touched keys is operated at the same time, which is similar to radio button in computer GUI menu.
3. The slide gesture. The slide gesture is applied to the function adjustment area. A right-side imitated key supports only a right-waving gesture, and a left-side imitated key supports only a left-waving gesture. The operation menu is rightward or leftward switched (rotated) when any one of the function selection blocks is not selected. A forward-direction function key is sent when one of the function selection blocks is selected and the user rightward waves his/her arm. On the contrary, a backward-direction function key is sent when one of the function selection blocks is selected and the user leftward waves his/her arm. Take the volume control for example. The volume is turned up when a volume control function (an operation function is set in one of the function selection blocks) is selected and the user rightward waves his/her arm. On the contrary, the volume is turned down when the volume control function is selected and the user leftward wave his/her arm. In addition, the forward-direction function key and the backward-direction key are also sent when the user leftward and rightward waves his/her arms, respectively. It is not limited to the above-mentioned operation.
4. The cancel gesture. The cancel gesture can be operated to return to the preceding menu or close the present menu when the user raises both arms forward and waves both arms leftward and rightward (shown in Fig. 7).

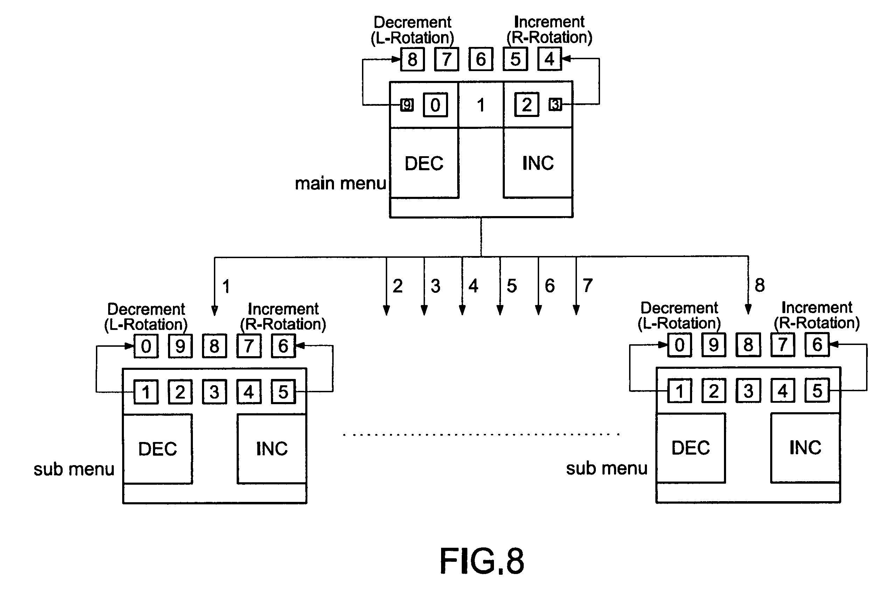

The above-mentioned operation menu of the universal imitated gesture-based remote control system can be switched to a main menu and a sub menu. The main menu is provided to switch appliance options of the controlled electronic appliance and setting options of the remote control system. In the main menu, the function adjustment blocks are operated to switch (rotate) the appliance options when the user leftward or rightward waves his/her arms. More particularly, the appliance options of the controlled electronic appliance are the television, the DVD player, the air conditioner, the computer, or so on. A corresponding sub menu is activated, namely opened, when one of the appliance options of the controlled electronic appliance is selected. Furthermore, the main menu can be closed when the cancel gesture is operated. The sub menu is provided to switch operation options of the corresponding appliance options. In the sub menu, the operation options in the function selection blocks can be selected to operate, further the operation of the operation option can be canceled. The operation options (such as a volume control, a channel selection, or a color regulation) of the controlled electronic appliance can be switched (rotated) when any one of the function selection blocks are not selected and one of the imitated touched keys in the function adjustment blocks is clicked. In addition, the forward-direction function key or the backward-direction function key is sent when one of the function selection blocks is selected and one of the imitated touched keys in the function adjustment blocks is clicked. The sub menu can be operated to return to the main menu when the cancel gesture is operated (shown in Fig. 8).

The main menu has to be closed and the position gesture (the user raises both arms leftward and rightward and waves both arms upward and downward) is operated again when another user want to operate the gesture-based remote control system. Hence, only one user can operate the remote control system at the same time, namely, only one user can be captured in visible area by the camera module.

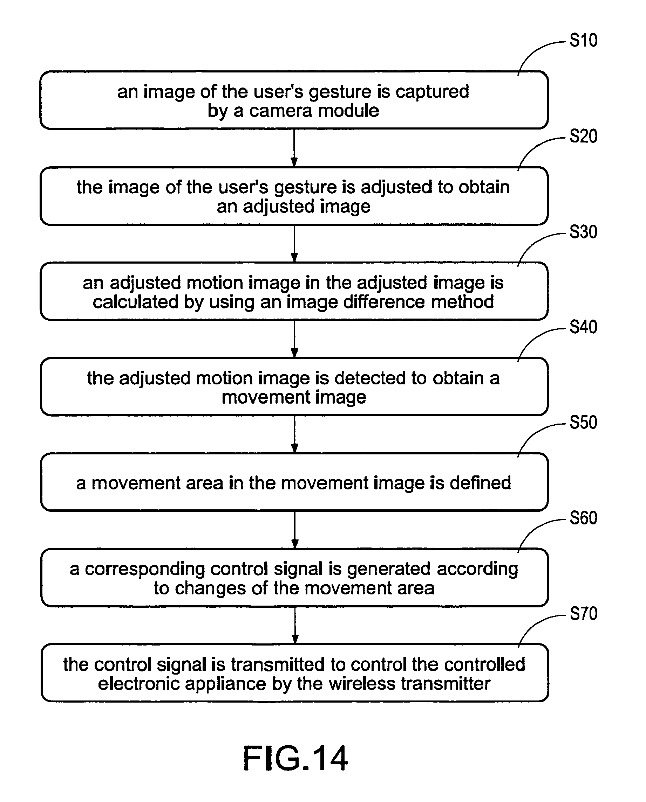

Reference is made to Fig. 14 which is a flowchart of executing the gesture-based remote control system. The gesture-based remote control system is provided to control a controlled electronic appliance by detecting a gesture of the user. The controlled electronic appliance can be a television, a DVD player, an air conditioner, a computer, or so on. Firstly, an image of a user is captured by a camera module (S10). Afterward, the image is adjusted to obtain an adjusted image (S20). Afterward, an adjusted motion image in the adjusted image is calculated by using an image difference method (S30). Afterward, a movement image in the adjusted image is detected (S40). Afterward, a movement area in the movement image is defined (S50). Afterward, a corresponding control signal is generated according to the movement area (S60). Finally, the control signal is transmitted to control the controlled electronic appliance by the wireless transmitter (S70). The detailed description of operating the gesture-based remote control system is given as follows.

The step S20 of adjusting the image of the user's gesture to obtain an adjusted image includes following sub-steps: (1) to adjust processed size of the image of the user's gesture; (2) to transform colors of the image of the user's gesture (from 24-bit full-color image to 8-bit gray-level image); and (3) to filter speckle noises of the image of the user's gesture. More particularly, speckle noises of the image of the user's gesture can be filtered by an image low pass filter.

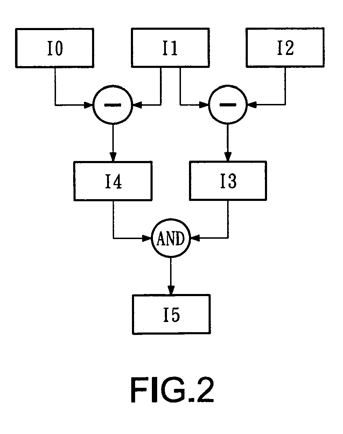

The step S30, the adjusted motion image in the adjusted image is calculated by using an image difference method. Reference is made to Fig. 2 which is a schematic view of using an image difference method. In order to obtain better performance, three continuous gesture images are provided to calculate the adjusted motion image. The three continuous gesture images (the image of the user's gesture) are a current grey-level image I2, a preceding grey-level image I1 before the current grey-level image I2, and a pre-preceding grey-level image I0 before the preceding grey-level image I1, respectively. A first gray-level threshold value and a second gray-level threshold are set for converting the grey-level image into a binary image. Firstly, the current grey-level image I2 is subtracted by the preceding grey-level image I1 to obtain a first grey-level image (not shown). Afterward, a grey value of each pixel of the first grey-level image is compared to the first gray-level threshold value. A pixel is set as a bright pixel when the grey value of the pixel is greater than or equal to the first gray-level threshold value; on the contrary, a pixel is set as a dark pixel when the grey value of the pixel is less than the first gray-level threshold value. Hence, a first binary image I3 is composed of the bright pixels and the dark pixels. In the same way, the preceding grey-level image I1 is subtracted by the pre-preceding grey-level image I0 to obtain a second grey-level image (not shown). Afterward, a grey value of each pixel of the first grey-level image is compared to the second gray-level threshold value. A pixel is set as a bright pixel when the grey value of the pixel is greater than or equal to the second gray-level threshold value; on the contrary, a pixel is set as a dark pixel when the grey value of the pixel is less than the second gray-level threshold value. Hence, a second binary image 14 is composed of the bright pixels and the dark pixels. Finally, a logic AND operation is performed between the first binary image I3 and the second binary image 14 to produce a third binary image I5, that the third binary image 15 is the adjusted motion image. Hence, positions of the images of the user's gesture can be detected.

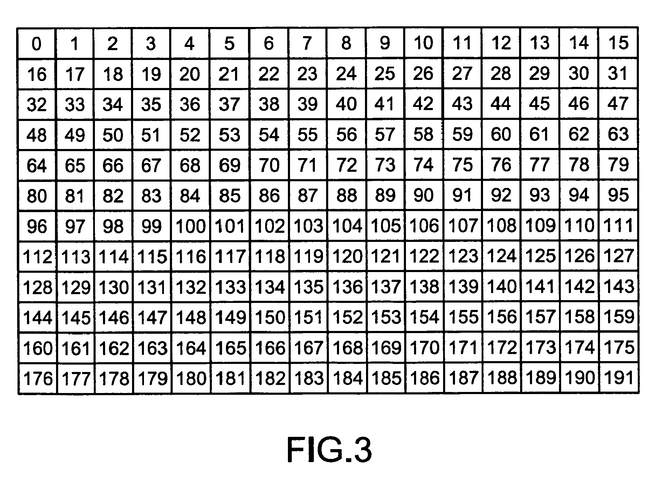

The detailed description of the step S40 is given as follows. Firstly, the third binary image I5 is divided into a plurality of division sections (shown in Fig. 3). A movement threshold is set to determine whether each of the division sections is a movement section or not. In a preferred embodiment, the division section is set as a bright section when the amount of motion pixels of the division section is greater than the movement threshold, namely, the division section is regard as the movement section. On the contrary, the division section is set as a dark section when the amount of motion pixels of the division section is less than the movement threshold, namely, the division section is not regard as the movement section. For example, an image with 160*120 pixels is divided into 192 (16*12=192) division sections; namely, each of the division sections has 100 ((160/16)*(120/12)=100) pixels. It is assumed that the movement threshold is set to 50. The division section is the movement section when the amount of the motion pixels in one division section is greater than the movement threshold. Hence, a gross motion or a slight motion can be filtered to reduce the possibility of incorrect operations.

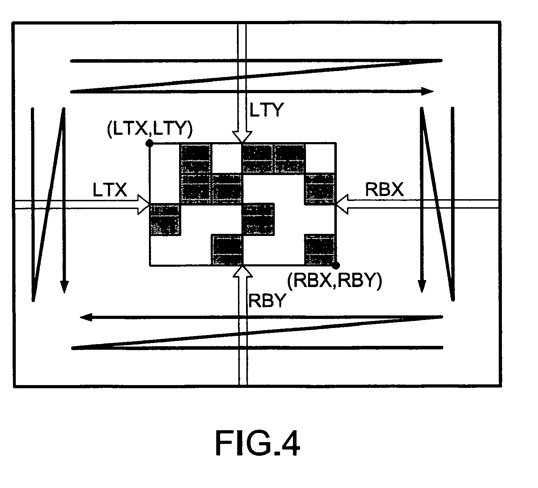

The detailed description of the step S50 is given as follows. The coordinate boundary of a movement area in the movement image is defined as (LTX, LTY) to (RBX, RBY), as shown in Fig. 4. The top edge of the movement area, LTY, is set when the movement section is firstly detected from top to bottom and from left to right in the movement image. Also, the bottom edge (RBY), left edge (LTX), and right edge (RBX) of the movement area are set in analogous ways, respectively. The movement section is not be detected or area of the movement section is too small when the coordinate boundary of the movement area is (0,0) to (0,0). Hence, the operation menu (the main menu and the sub menu included) is automatically closed when an elapsed time exceeds a setting time.

As mentioned above, the gesture-based remote control system judges the user's gesture to a location gesture, a click gesture, a slide gesture, and a cancel gesture. The click gesture is a time-independent gesture, however, the slide gesture, the location gesture, or the cancel gesture are time-dependent gestures. In order to recognize types of these gestures, the recent coordinate and size of the movement area need to be recorded. The click gesture is recognized to provide the click command when the movement area overlaps the click defined block. The slide gesture is recognized when the movement area laterally (leftward or rightward) move continuously. More particularly, the movement area continually moves laterally, namely, the movement continually moves leftward or rightward. The increment command is provided when the movement area rightward moves in the function adjustment blocks continually; on the contrary, the decrement command is provided when the movement area leftward moves in the function adjustment blocks. The cancel gesture is generated when the movement area makes laterally continuously changes (shown in Fig. 7). The position gesture is generated when the movement area makes lateral-to-lengthwise or lengthwise-to-lateral changes (shown in Fig. 5). However, a moving object passes through lens of the camera module to generate abnormal disturbance when the movement area is too large or the movement area makes lengthwise continuously changes. Also, other undefined or unrecognized gesture operations are invalid.

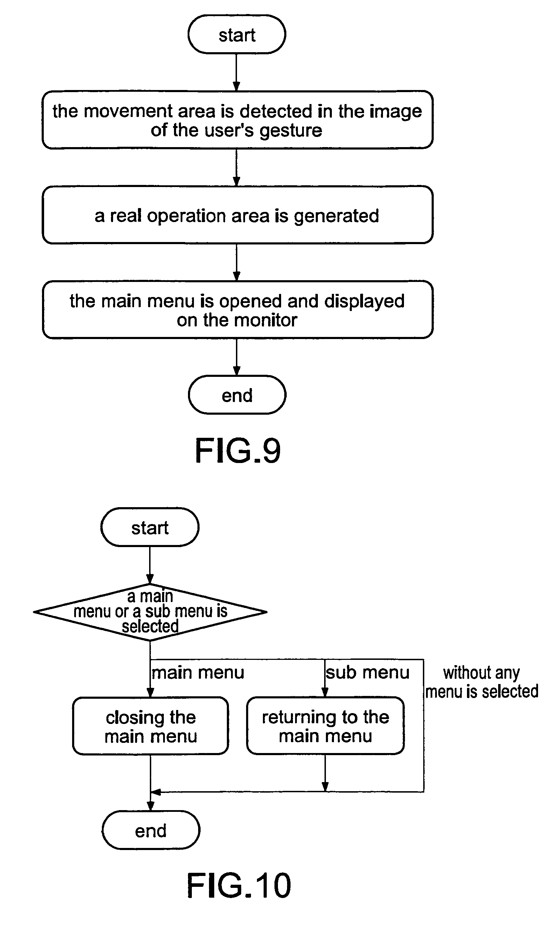

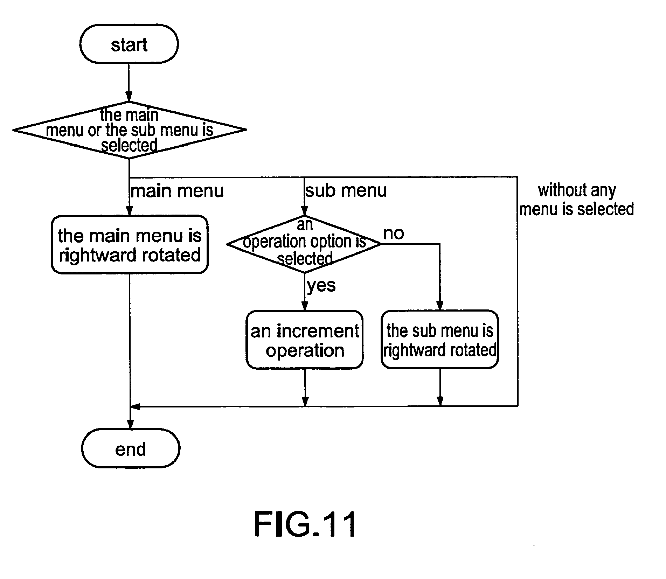

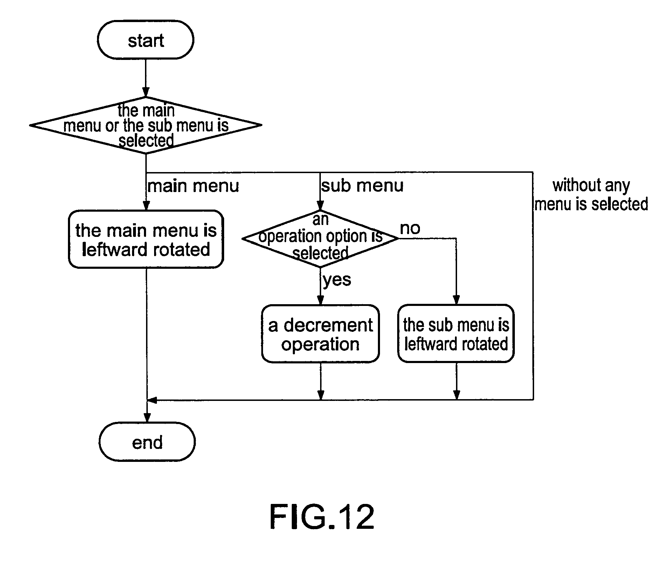

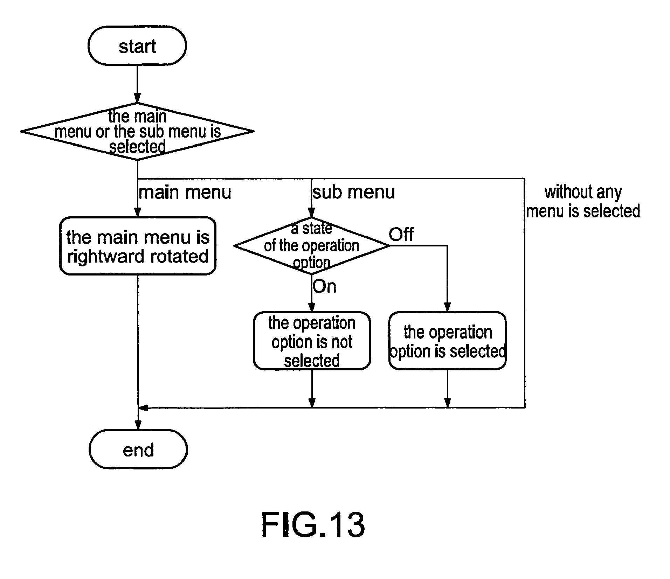

The detailed description of the step S60 is given as follows:
1. The position gesture can be operated in both the main menu and the sub menu. In addition, the position gesture is detected according to the movement area to generate a real operation area. The main menu is opened and displayed on the monitor. The position procedure is shown in Fig. 9.
2. The cancel gesture can be operated in both the main menu and the sub menu to return to the preceding menu or close the present menu. The cancel procedure is shown in Fig. 10
3. The increment slide gesture (further called an increment gesture) can be operated in both the main menu and the sub menu. The appliance options in the function selection blocks are rightward switched (rotated) when the increment gesture is operated in the main menu. The operation options is rightward switched (rotated) when the increment gesture is operated in the sub menu and one of the operation options is not selected. In addition, an increment function is operated when the increment gesture is operated in the sub menu and one of the function options is selected. The increment slide procedure is shown in Fig. 11.
4. The decrement slide gesture (further called a decrement gesture) is similarly operated to the increment gesture. The differences between the increment gesture and the decrement gesture are that the switched (rotated) direction and some amount are opposite. The decrement slide procedure is shown in Fig. 12.
5. The click gesture can be operated in both the main menu and the sub menu. A selection of the function selection blocks is valid when the click gesture is operated in the main menu and one of the function selection blocks is exactly selected. The operation option selected is enabled when the click gesture is operated in the sub menu, and further the operation option selected is disabled when the click gesture is operated again. Moreover, the present operation option is closed when another operation option is selected. Hence, only one of the operation options is operated at the same time. The click procedure is shown in Fig. 13.

In conclusion, the present invention has the following features:
1. The user's skin color, dress and adornment, and complexity of the environmental background are not limited for operating the gesture-based remote control system. Also, users can manually operate the non-contact mouse apparatus without holding any objects with special colors or patterns, hand-held lighting device, wearing any special data gloves, or operating by special gestures.
2. The gesture-based remote control system is provided to combine with a traditional TV or a digital TV to make the tradition TV or the digital TV as a multi-function universal remote control. The contents of the operation menus can be directly displayed on the monitor of the TV and the operation menus are operated to control various electronic appliances by just using user's gestures without any physical remote controls.
3. The defined operation options can be easily selected because the operation locations of the operation menus are located near the user. Also, simple arm action, such as leftward or rightward waves the arm can fulfill the operation of switching (rotating) operation options and sending the forward-direction function key and the backward-direction function key.
4. The cyclic menu is adopted to contain more operation options and further be more user-friendly and intuitive.
5. The excessively-large movement area is automatically filtered to exclude incorrect moving objects.

## Claims

1. A gesture-based remote control system, comprising:
a camera module (300);
an image recognition module (100) electrically connected to the camera module (300);
a wireless transmitter (400) electrically connected to the image recognition module (100); and
a main-controlling electronic appliance (200) having a monitor (202) and the main-controlling electronic appliance (200) detachably connected to the image recognition module (100);
wherein a motion controlling command is obtained by recognizing an image of a user in the camera module (300) with the image recognition module (100); a key controlling command is obtained from the motion controlling command and a key code information by the image recognition module (100); the key controlling command is sent to the wireless transmitter (400) by the image recognition module (100); the key controlling command is sent to a controlled electronic application by the wireless transmitter (400) to control the controlled electronic application.

2. The gesture-based remote control system in claim 1, wherein the main-controlling electronic appliance (200) is a television.

3. The gesture-based remote control system in claim 2, wherein the television has an on-screen display (OSD) (204).

4. The gesture-based remote control system in claim 1, wherein the controlled electronic appliance is a television, a DVD player, an air conditioner, or a computer.

5. The gesture-based remote control system in claim 1, wherein the image recognition module (100) further comprises an erasable programmable read-only memory (EEPROM) (112).

6. The gesture-based remote control system in claim 1, further comprising an infrared port (500) electrically connected to the image recognition module (100), and the image recognition module (100) receives the key code information sent from the controlled electronic application through the infrared port (500).

7. The gesture-based remote control system in claim 1, wherein the key controlling command comprises a startup command, a cancel command, an increment command, a decrement command, and a click command.

8. The gesture-based remote control system in claim 1, wherein the recognition module (100) is detachably connected to the main-controlling electronic appliance (200).

9. The gesture-based remote control system in claim 8, wherein the image recognition module (100) is connected to the main-controlling electronic appliance (200) through a serial port.

10. The gesture-based remote control system in claim 1, wherein the image recognition module (100) further comprises:
a digital image processor (102) electrically connected to the camera module (300);
a microprocessor (104) electrically connected to the digital image processor (102);
and
an analog-to-digital converter (114) electrically connected to the microprocessor (104).

11. The gesture-based remote control system in claim 1, wherein the key code information is stored in the image recognition module (100).

## Amended claims

### Amended claims in accordance with Rule 137(2) EPC.

**1.** A gesture-based remote control system, comprising:
a camera module (300);
an image recognition module (100) electrically connected to the camera module (300);
a wireless transmitter (400) electrically connected to the image recognition module (100); and
a main-controlling electronic appliance (200) having a monitor (202), wherein the main-controlling electronic appliance (200) is detachably connected to the image recognition module (100);
wherein the image recognition module (100) is adapted to obtain a motion controlling command by recognizing an image of a user captured with the camera module (300) ;
the image recognition module (100) is adapted to obtain a key controlling command from the motion controlling command and a key code information;
the image recognition module (100) is adapted to sent the key controlling command to the wireless transmitter (400) ;
the wireless transmitter (400) is adapted to sent the key controlling command to a controlled electronic application to control the controlled electronic application.

**2.** The gesture-based remote control system in claim 1, wherein the main-controlling electronic appliance (200) is a television.

**3.** The gesture-based remote control system in claim 2, wherein the television has an onscreen display (OSD) (204).

**4.** The gesture-based remote control system in claim 1, wherein the controlled electronic appliance is a television, a DVD player, an air conditioner, or a computer.

**5.** The gesture-based remote control system in claim 1, wherein the image recognition module (100) further comprises an erasable programmable read-only memory (EEPROM) (112).

**6.** The gesture-based remote control system in claim 1, further comprising an infrared port (500) electrically connected to the image recognition module (100), the image recognition module (100) is adapted to receive the key code information sent from the controlled electronic application through the infrared port (500).

**7.** The gesture-based remote control system in claim 1, wherein the key controlling command comprises a startup command, a cancel command, an increment command, a decrement command, and a click command.

**8.** The gesture-based remote control system in claim 1, wherein the image recognition module (100) is connected to the main-controlling electronic appliance (200) through a serial port.

**9.** The gesture-based remote control system in claim 1, wherein the image recognition module (100) further comprises:
a digital image processor (102) electrically connected to the camera module (300);
a microprocessor (104) electrically connected to the digital image processor (102); andan analog-to-digital converter (114) electrically connected to the microprocessor (104).

**10.** The gesture-based remote control system in claim 1, wherein the key code information is stored in the image recognition module (100).
